# EUROPÄISCHE PATENTSCHRIFT

(11) **EP 1 607 260 B1**
(45) Veröffentlichungstag und Bekanntmachung des Hinweises auf die Patenterteilung: **25.06.2008**
(21) Anmeldenummer: 05008232.0
(22) Anmeldetag: 15.04.2005
(51) Int. Cl.: B60J 10/02

(54) **Verglasungsanordnung für ein Kraftfahrzeug**
Glazing assembly for a motor vehicle
Arrangement de vitrage pour un véhicule automobile

(30) Priorität: 18.06.2004 DE 102004029620
(43) Veröffentlichungstag der Anmeldung: 21.12.2005
(73) Patentinhaber: Dr. Ing. h.c. F. Porsche Aktiengesellschaft, 71287 Weissach (DE)
(72) Erfinder: Steinnagel, Wolfgang, 71287 Weissach (DE)

(56) Entgegenhaltungen:
- EP-A- 0 601 693
- EP-A- 0 955 197
- GB-A- 1 014 924
- US-A- 5 283 100
- US-A- 5 311 711
- US-A- 5 803 527
- US-B1- 6 227 598

## Beschreibung

Bei der Erfindung wird ausgegangen von einer Verglasungsanordnung für Kraftfahrzeug, gemäß Oberbegriff des Anspruchs 1.

Die EP 0 601 693 A1 beschreibt eine Verglasungsanordnung für Kraftfahrzeuge, die gattungsbildend eine feststehende Scheibe und ein Dichtungselement für den Randbereich eines Karosserieausschnitts aufweist. Das Dichtungselement besitzt einen Befestigungsabschnitt, der als Schlitz ausgeführt ist und der auf den Rand der Scheibe aufgesteckt ist. Von dem Befestigungsabschnitt geht eine Dichtungslippe aus, die im Querschnitt gesehen aus zwei Lagen aufgebaut ist, wobei von den zwei Lagen eine äußere eine Sichtlage bildet und aus einem gegenüber der darunter liegenden Lage widerstandsfähigeren Material gebildet ist. Die bekannte Verglasungsanordnung kann insbesondere im Bereich des Befestigungsabschnitts ein Quietschen während der Fahrt erzeugen, wenn sich die Verglasungsanordnung relativ zur Karosserie bewegt.

Eine aus der DE 199 61 706 A1 bekannte Verglasungsanordnung umfasst eine Scheibe und ein Dichtungselement, das an der Innenseite der Scheibe mit einem Befestigungsabschnitt befestigt ist. Die Scheibe wird ferner mit einem Randbereich des Karosserieausschnitts, den die feststehende Scheibe verschließt, durch eine Kleberaupe verklebt. Von dem Befestigungsabschnitt geht eine elastische Dichtungslippe auf, wobei Befestigungsabschnitt und Dichtungslippe aus einem Kunststoff hergestellt sind, jedoch unterhalb des Befestigungsabschnitts noch ein Stützkörper aus einem anderen Kunststoff anextrudiert sein kann. Das freie Ende der Dichtungslippe kommt mit dem Randbereich des Karosserieausschnitts zur Anlage, wenn die Verglasungsanordnung in den Karosserieausschnitt eingesetzt wird.

Die DE 36 02 198 C1 beschreibt eine Verglasungsanordnung, bei der eine einen Scheibenrand umgreifende Dichtung einer Vorfixierung der Verglasungsanordnung dient, bis eine Klebraupe ausgehärtet ist.

Nach der EP 99 460 B1 wird eine Verglasungsanordnung vorgeschlagen, die eine Scheibe und eine am Scheibenrand befestigte Dichtung mit einem Befestigungsabschnitt und einer davon ausgehenden elastischen Dichtungslippe umfasst. Die Dichtungslippe ist über einen flexiblen Steg mit dem Befestigungsabschnitt verbunden, so dass sie aus einem zwischen dem Scheibenrand und einem Randbereich eines Karosserieausschnitts vorliegenden Spalt heraus geschwenkt werden kann, um beispielsweise den Randbereich nachlackieren zu können.

Aufgabe der Erfindung ist es, eine Verglasungsanordnung der eingangs genannten Art hinsichtlich der Geräuschentwicklung des Dichtungselements zu verbessern.

Gelöst wird diese Aufgabe mit einer Verglasungsanordnung, die die in Anspruch 1 genannten Merkmale aufweist. Weitere Ausgestaltungen der Erfindung sind in den Unteransprüchen angegeben.

Die mit der Erfindung außerdem erzielten Vorteile sind darin zu sehen, dass ein Nachlackieren des Randbereichs der Karosserieausschnitts mit anschließender Wärmebehandlung möglich ist, um den aufgetragenen Lack zu trocken,-ohne dass dabei die Sichtlage der Dichtungslippe durch die für die Lacktrocknung üblicherweise verwendeten Temperaturen in ihrer äußeren Erscheinung wesentlich beeinträchtigt wird. Die unterhalb der Sichtlage angeordnete zweite Lage hingegen kann dagegen in ihren Eigenschaften auf ein gewünschtes Dichtverhalten abgestimmt sein.

Durch die zumindest zwei Lagen kann die Dichtungslippe hinsichtlich ihres Federverhaltens optimiert sein, so dass sie auf dem Randbereich des Karosserieausschnitts sicher aufliegt, wobei dies insbesondere durch die Merkmale des Anspruchs 2 erreicht werden kann, da der härtere Kunststoff eine ausreichende Federkraft aufbringen kann.

Gemäß einem bevorzugten Ausführungsbeispiel mit den in Anspruch 3 genannten Merkmalen kann die Verglasungsanordnung als vormontierte Baugruppe auf den Randbereich des Karosserieausschnitts aufgelegt werden. Dabei dient die Auflage auch als Abstandhalter zwischen Scheibe und Randbereich für eine dazwischen aufzubringende Kleberaupe.

Eine Vorfixierung der Baugruppe, bestehend aus Scheibe und Dichtungselement, ist mit den Merkmalen des Anspruchs 4 gegeben, wobei der selbstklebende Klebestreifen die Verglasungsanordnung in der gewünschten Position hält, bis die Kleberaupe genügend ausgehärtet und die Verglasungsanordnung dauerhaft fixiert und am Randbereich befestigt ist.

Nach einer Ausführungsform mit den in Anspruch 7 aufgeführten Merkmalen kann die Baugruppe aus Scheibe und Dichtungselement einfach und kostengünstig zusammen gesetzt werden.

Als besonders vorteilhaft hat sich ein Ausführungsbeispiel herausgestellt, bei dem die Dichtungslippe die Merkmale des Anspruchs 10 aufweist. Kommt die Dichtungslippe in federnde Anlage mit dem Randbereich des Karosserieausschnitts, kann sie soweit in Richtung Scheibenrand geschwenkt sein, dass dieser Scheibenrand in der Einkerbung liegt, wodurch auf zusätzliche Dicht - bzw. Kederleisten ggf. verzichtet werden kann.

Die Erfindung wird nachfolgend anhand von Ausführungsbeispielen mit Bezug auf die Zeichnung näher erläutert. Es zeigen:
- Fig. 1: in perspektivischer Ansicht ein Kraftfahrzeug mit einer vorderen und hinteren Verglasungsanordnung,
- Fig. 2: die vordere Verglasungsanordnung in einem Teilschnitt entlang der Linie II-II in Fig. 1 und
- Fig. 3: die hintere Verglasungsanordnung in einem Teilschnitt entlang der Linie III-III in Fig. 1.

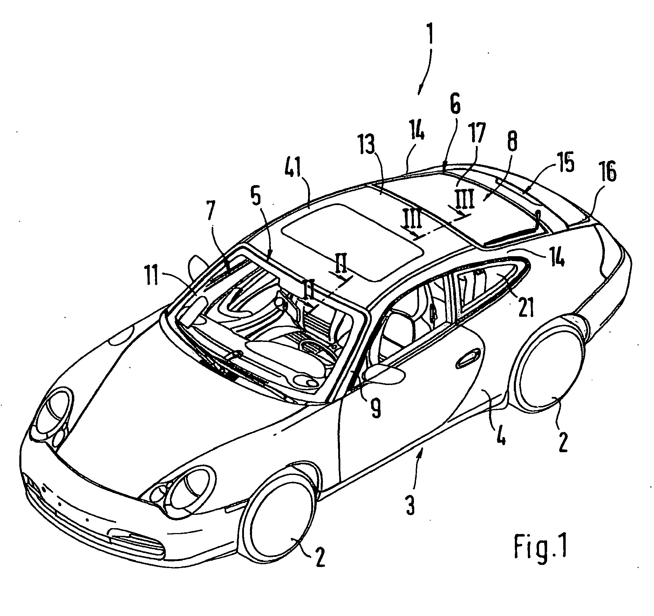

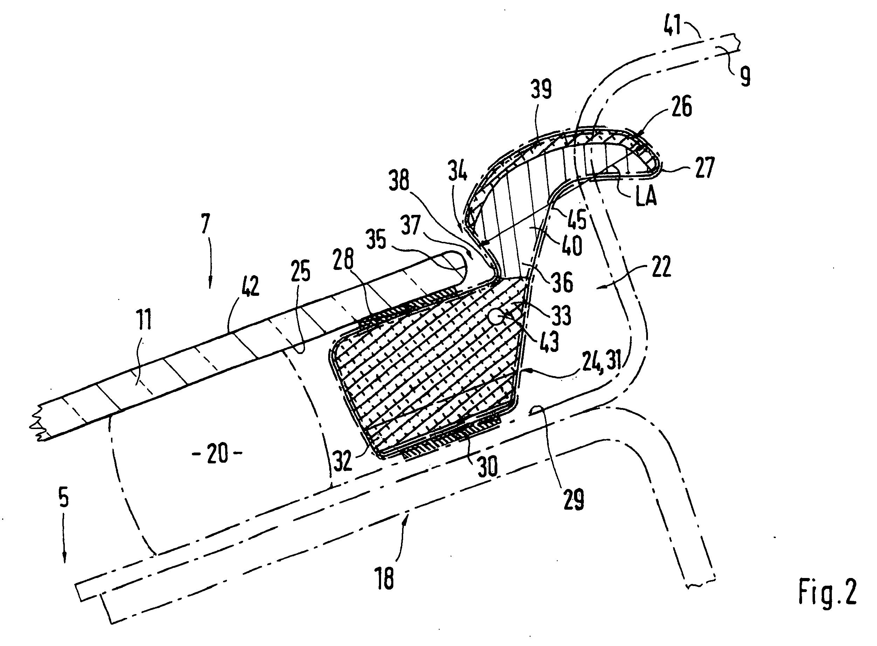

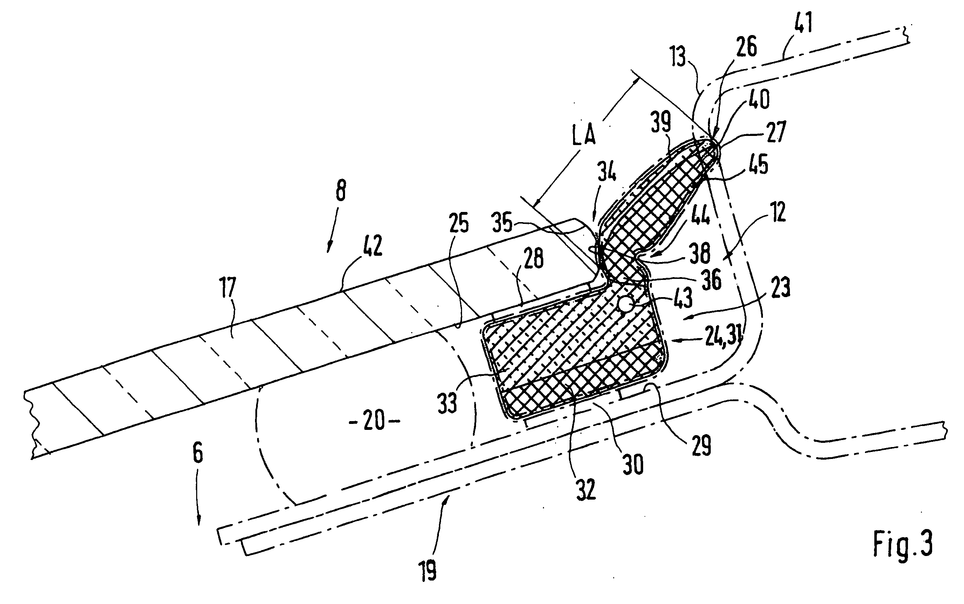

Ein in Fig. 1 dargestelltes Kraftfahrzeug 1, insbesondere Personenwagen, besitzt einen von Rädern 2 getragenen Aufbau 3 mit einer Karosserie 4, die einen oder mehrere Karosserieausschnitte 5 bzw. 6 aufweist, in denen jeweils eine Verglasungsanordnung 7 bzw. 8 eingesetzt ist. Im gezeigten Ausführungsbeispiel des Kraftfahrzeugs 1 ist der vordere Karosserieausschnitt 5 von einem Windlauf 9 umlaufend umgeben, welcher Windlauf 9 somit einen Randbereich 10 (Fig. 2) des Karosserieausschnitts 5 bildet. Die vordere Verglasungsanordnung 7 umfasst mithin die Windschutzscheibe 11. In den hinteren Karosserieausschnitt 6 ist die hintere Verglasungsanordnung 8 eingesetzt. Der Karosserieausschnitt 6 wird begrenzt von einem Randbereich 12 (Fig. 3), der von einer hinteren Dachkante 13, seitlichen Säulen 14, insbesondere C-Säulen, des Aufbaus 3, und einem Heckteil 15, insbesondere einer feststehenden Heckblende, gebildet ist, an welche Heckblende sich eine Heckklappe 16 anschließen kann. Die hintere Verglasungsanordnung 8 umfasst somit eine Heckscheibe 17. Wie aus den Fig. 2 und 3 hervorgeht, besitzt jeder Randbereich eine Flansch 18 bzw. 19, die den jeweiligen Karosserieausschnitt 5 bzw. 6 begrenzen und auf denen die Verglasungsanordnung 7 bzw. 8 mit der Scheibe 11 bzw. 17 (Windschutzscheibe bzw. Heckscheibe) abgelegt und jeweils über einen Kleberaupe 20 fest mit dem Aufbau 3 verklebt ist. Die Scheiben 11 und 17 sind demnach feststehend ausgebildet. Es wäre somit denkbar, die Verglasungsanordnung 7 bzw. 8, wie sie nachfolgend beschrieben ist, allgemein für feststehende Scheiben, beispielsweise eine Seiten- bzw. Fondscheibe 21, an dem Kraftfahrzeug 1 zu verwenden.

Jede Verglasungsanordnung 7 bzw. 8 weist die zugehörige Scheibe 11 bzw. 17 und ein Dichtungselement 22 bzw. 23 auf, das jeweils mehrere Abschnitte besitzt, von denen ein Befestigungsabschnitt 24 zwischen einer Innenseite 25 der Scheibe 11 bzw. 17 und dem Randbereich 10 bzw. 12 angeordnet ist und von denen ein anderer Abschnitt eine elastische Dichtungslippe 26 bildet, die von dem Befestigungsabschnitt 24 ausgeht und auf dem Randbereich 10 bzw. 12 mit ihrem freien Ende 27 anliegt.

Der Befestigungsabschnitt 24 ist einerseits mit der Innenseite 25 der Scheibe 11 bzw. 17 verbunden, vorzugsweise durch einen zwischen Innenseite 25 und Befestigungsabschnitt 24 angebrachten selbstklebenden Klebestreifen 28, der insbesondere als doppelseitiges Klebeband ausgeführt ist. Andererseits ist zwischen dem Befestigungsabschnitt 24 und einer Verbindungsfläche 29 des Randbereichs 10 bzw. 12 ein weiterer selbstklebender Klebestreifen 30 angebracht, der insbesondere als doppelseitiges Klebeband ausgeführt ist. Die Verbindungsfläche 29 befindet sich vorzugsweise an dem Flansch 18 bzw. 19. Beim Einsetzen der Verglasungsanordnung 7 bzw. 8 in den zugeordneten Karosserieausschnitt 5 bzw. 6 ist durch den Klebestreifen 28 das Dichtungselement 22 bzw. 23 bereits an der Innenseite 25 befestigt, so dass Scheibe und Dichtungselement ein vormontierte Baugruppe bilden. Vorzugsweise ist vor dem Einsetzten der Verglasungsanordnung 7 bzw. 8 in den Ausschnitt 5 bzw. 6 an der Verbindungsfläche 29 durch einen Roboter bereits die Klebraupe 20 aufgebracht worden. Beim Einsetzten der Verglasungsanordnung 7 bzw. 8 in den Ausschnitt 5 bzw. 6 wird die Scheibe 11 bzw. 17 durch den am Befestigungsabschnitt 24 angebrachten selbstklebenden Streifen 30 am Flansch 18 bzw. 19 gehalten und vorfixiert, bis die zwischen Innenseite 25 und Verbindungsfläche 29 angebrachte Kleberaupe 20 ausgehärtet ist, die die Verglasungsanordnung 7 bzw. 8 schließlich dauerhaft mit dem Randbereich 10 bzw. 12 verbindet. Der Befestigungsabschnitt 24 bildet mithin eine Auflage 31 für die Scheibe 11 bzw. 17, so dass sich diese auf dem Randbereich 10 bzw. 12 abstützen kann und zwischen Innenseite 25 und Verbindungsfläche 29 ein gewünschter Abstand eingehalten werden kann, insbesondere bis die Klebraupe 20 ausgehärtet ist. Der Befestigungsabschnitt 24 ist als zumindest zweischichtiger Körper mit einer ersten Schicht 32 und einer zweiten Schicht 33 ausgeführt, welche Schichten 32 und 33 übereinander angeordnet sind und aus unterschiedlich harten Werkstoffen hergestellt sind. Die erste Schicht 32 umfasst einen ersten Werkstoff, insbesondere Kunststoff, vorzugsweise EPDM, der weicher als ein zweiter Werkstoff, insbesondere Kunststoff, vorzugsweise EPDM, für die zweite Schicht 33 ist.

Von dem Befestigungsabschnitt 24 geht die Dichtungslippe 26 aus und erstreckt sich durch einen Spalt 34 hindurch, der zwischen einem Scheibenrand 35 und dem Randbereich 10 bzw. 12 des jeweiligen Ausschnitts 5 bzw. 6 vorliegt. In den Fig. 2 und 3 ist die Dichtungslippe 26 in einem entspannten Zustand eingezeichnet. In tatsächlicher Einbaulage liegt die Dichtungslippe 26 auf dem Randbereich 10 bzw. 12 mit ihrem freien Ende 27 auf. Im Ausführungsbeispiel geht die Dichtungslippe 26 von der oberen, zweiten Schicht 33, vorzugsweise randseitig von dem Befestigungsabschnitt 24 aus bzw. ist damit verbunden. Zwischen Dichtungslippe 26 und Befestigungsabschnitt 24 kann noch ein Verbindungsfortsatz 36 angeordnet sein. Die Dichtungslippe 26 und/oder der Verbindungsfortsatz 36 besitzen eine Einkerbung 37, die an einer dem Scheibenrand zugewandten Anlagefläche 38 der Dichtungslippe 26 bzw. des Verbindungsfortsatzes 36 eingebracht ist. In der Einkerbung 37 liegt der Scheibenrand 35, wenn die Dichtungslippe 26 in ihrer tatsächlichen Einbaulage vorliegt. Somit kann von der Dichtungslippe 26 sowohl der Scheibenrand 35 als auch der Randbereich 10 bzw. 12 zumindest teilweise abgedeckt werden.

Die Dichtungslippe 26 ist über ihre sich zwischen dem freien Ende 27 und der Anlagefläche 38 gemessene Länge LA gesehen mehrlagig, insbesondere zweilagig, mit zumindest zwei übereinander angeordneten Lagen 39 und 40 ausgeführt, von denen eine erste Lage 39 eine Sichtlage bildet, die die Dichtungslippe 26 an einer Fahrzeugaußenseite 41 (Fig. 1) verkleidet. Die zweite Lage 40 liegt unter der ersten Lage 39 und ist dem Randbereich 10 bzw. 12 zugewandt. Beiden Lagen 39 und 40 sind fest miteinander verbunden. Der Verbindungsfortsatz 36 ist einstückig mit der zweiten Lage 40 ausgeführt. Die die elastische Dichtungslippe 26 bildenden Lagen sind aus unterschiedlichen Werkstoffen ausgeführt, wobei ein erster Werkstoff, insbesondere Kunststoff, vorzugsweise EPDM, für die Sichtlage (Lage 39) verwendet wird, der gegenüber einem zweiten Werkstoff, insbesondere Kunststoff, vorzugsweise EPDM, für die zweite Lage 40 zumindest eine höhere Temperaturbeständigkeit aufweist, so dass die Sichtlage bei einer Wärmebehandlung der Karosserie 4 nicht beschädigt, insbesondere in seiner Oberflächenbeschaffenheit nicht verändert wird. Bei der Wärmebehandlung können Temperaturen gewählt werden, wie sie typischerweise zum Aushärten von auf der Außenseite 41 der Karosserie 4 angebrachten Farbschichten (nicht dargestellt) auftreten. Beispielsweise können hier Temperaturen von bis zu 160°C, ggf. auch darüber, eingestellt werden. Beispielsweise zum Nachlackieren des Randbereichs 10 bzw. 12 kann die Dichtungslippe 26 von ihrer Anlage mit dem Randbereich 10 bzw. 12 entfernt und auf eine Außenfläche 42 der Scheibe 11 bzw. 12 herum geklappt werden, so dass der Randbereich 10 bzw. 12 für einen Lack- bzw. Farbauftrag zugänglich ist. Nach der Wärmebehandlung kann die Dichtungslippe 26 wieder in ihre tatsächliche Einbaulage zurück geschwenkt werden, in der sie den Spalt 34 überdeckt.

Der erste Werkstoff für die erste Schicht 32 der Auflage 31 bzw. des Befestigungsabschnitts 24 und der erste Werkstoff für die Sichtlage (Lage 39) können vorzugsweise identisch sein. Gleiches gilt für den zweiten Werkstoff für die zweite Lage 40 und der zweiten Schicht 33, so dass der erste Werkstoff sowohl eine höhere Temperaturbeständigkeit als auch eine größere Härte aufweist als der zweite Werkstoff. Wie insbesondere aus Fig. 2 und 3 hervorgeht, reicht die Sichtlage nicht bis in den Bereich des Verbindungsfortsatzes 36 bzw. nicht bis in die Anlagefläche 38, sondern endet davor, was das Wegschwenken der Dichtungslippe 26 in Richtung der Außenfläche 42 erleichtert.

Das Dichtungselement 22 bzw. 23 mit dem jeweiligen Befestigungsabschnitt 24 und der Dichtungslippe 26 kann beispielsweise als Zwei-Komponenten-Teil aus dem ersten und zweiten Werkstoff hergestellt, insbesondere extrudiert werden. Bei der Herstellung des Dichtungselements 22 bzw. 23 kann beispielsweise in den Befestigungsabschnitt 24 noch ein umlaufender Stabilisierungsfaden 43 eingebracht werden, der im wesentlichen undehnbar ist. Das Dichtungselement 22 bzw. 23 ist vorzugsweise umlaufend an dem Scheibenrand 35 vorgesehen, könnte alternativ lediglich abschnittsweise dort angeordnet sein.

Anders als beim Ausführungsbeispiel nach Fig. 2 gezeigt, könnte die Scheibe 11 als Mehrscheibenglas ausgeführt sein. Insbesondere kann ein so genanntes Zweischeiben-Sicherheitsglas verwendet werden. Die Dichtungslippe 26 mit ihrer Anlagefläche 38 könnte dann mit der äußeren, hier nicht gezeigten Scheibe bzw. deren Scheibenrand zusammenwirken.

Beim Ausführungsbeispiel nach Fig. 3 ist die Dichtungslippe 26 mit einem Einschnitt 44 versehen, der an einem dem Randbereich 12 zugewandeten Außenhautabschnitt 45 der Dichtungslippe 26, insbesondere in deren zweite Lage 40 eingebracht sein kann.

## Patentansprüche

1. Verglasungsanordnung (7, 8) für ein Kraftfahrzeug (1), mit einer Scheibe (11, 17) und einem Dichtungselement (22, 23) für die feststehende, mit einem Randbereich (10, 12) eines Karosserieausschnitts (5, 6) zu verklebende Scheibe, welches Dichtungselement einen Befestigungsabschnitt (24) aufweist, die als Auflage (31) ausgebildet ist und der mit einer Innenseite (25) der Scheibe verbunden ist und welches Dichtungselement eine von dem Befestigungsabschnitt ausgehende Dichtungslippe (26) umfasst, die in Anlage mit dem Randbereich des Karosserieausschnitts bringbar ist, wobei die Dichtungslippe (26) - über ihre Länge (LA) gesehen - zumindest eine erste und zweite Lage (39, 40) umfasst, die übereinander angeordnet und fest miteinander verbunden sind, und wobei die erste Lage (39) eine Sichtlage bildet und gegenüber der darunter liegende zweite Lage (40) eine höhere Temperaturbeständigkeit aufweist, **dadurch gekennzeichnet, dass** die Auflage (31) aus zumindest zwei übereinander angeordneten Schichten (32, 33) unterschiedlicher Härte aufgebaut ist, dass eine untere Schicht (32) der Auflage (31) weicher als die darüber liegende, obere Schicht (33) ist, und dass von der oberen Schicht (33) die zweite Lage der Dichtungslippe (26) ausgeht.

2. Verglasungsanordnung nach Anspruch 1, dass die Sichtlage (Lage 39) gegenüber der darunter liegenden Lage (40) aus einem härteren Werkstoff, insbesondere Kunststoff, hergestellt ist.

3. Verglasungsanordnung nach Anspruch 1, **dadurch gekennzeichnet, dass** der Befestigungsabschnitt (24) des Dichtungselements (22, 23) als Auflage (31) ausgebildet ist, um die Scheibe (11, 17) auf dem Randbereich (10, 12) des Karosserieausschnitts (5, 6) abstützen zu können.

4. Verglasungsanordnung nach Anspruch 3, **dadurch gekennzeichnet, dass** die Auflage (31) an ihrer mit dem Randbereich (10, 12) des Karosserieausschnitts (5, 6) in Kontakt zu bringen Verbindungsfläche (29) mit einem selbstklebenden Streifen (30) ausgestattet ist.

5. Verglasungsanordnung nach Anspruch 4, **dadurch gekennzeichnet, dass** der selbstklebende Streifen (30) als doppelseitiges Klebeband ausgeführt ist.

6. Verglasungsanordnung nach Anspruch 1, **dadurch gekennzeichnet, dass** eine untere Schicht (32) der Auflage (31) weicher als die darüber liegende Schicht (33) ist.

7. Verglasungsanordnung nach einem der vorhergehenden Ansprüche, **dadurch gekennzeichnet, dass** die Auflage (31) über einen selbstklebenden Streifen (28), insbesondere doppelseitiges Klebeband, an einer Innenseite (25) der Scheibe (11, 17) befestigt ist.

8. Verglasungsanordnung nach Anspruch 1, **dadurch gekennzeichnet, dass** die Dichtungslippe (26) über einen Verbindungsfortsatz (36) mit der Auflage (31) verbunden ist und dass der Verbindungsfortsatz (36) und die zweite Lage (40) der Dichtungslippe (26) einstückig ausgeführt sind.

9. Verglasungsanordnung nach Anspruch 1, **dadurch gekennzeichnet, dass** das Dichtungselement (22, 23) einen umlaufenden Stabilisierungsfaden (43) aufweist.

10. Verglasungsanordnung nach Anspruch 1, **dadurch gekennzeichnet, dass** die Dichtungslippe (26) an ihrer einem Rand (35) der Scheibe (11, 17) zugewandten Anlagefläche (38) eine Einkerbung (37) aufweist.

## Claims

1. Glazing assembly (7, 8) for a motor vehicle (1), with a window (11, 17) and a sealing element (22, 23) for the fixed window which is to be adhesively bonded to a border region (10, 12) of a body cutout (5,6), which sealing element has a fastening section (24) which is designed as a support (31) and which is connected to an inside (25) of the window, and which sealing element comprises a sealing lip (26), which emerges from the fastening section and can be brought into contact with the border region of the body cutout, wherein the sealing lip (26) comprises - as seen over its length (LA) - at least one first and one second layer (39, 40) which are arranged one above the other and are fixedly connected to each other, and wherein the first layer (39) forms a viewing layer and has greater thermal stability than the second layer (40) located under it, **characterized in that** the support (31) is constructed from at least two plies (32, 33) which are of differing hardness and are arranged one above the other, **in that** a lower ply (32) of the support (31) is softer than the upper ply (33) lying above it, and **in that** the second layer of the sealing lip (26) emerges from the upper ply (33).

2. Glazing assembly according to Claim 1, **characterized in that** the viewing layer (layer 39) is produced from a harder material than the layer (40) lying below it, in particular plastic.

3. Glazing assembly according to Claim 1, **characterized in that** the fastening section (24) of the sealing element (22, 23) is designed as a support (31) in order to be able to support the window (11, 17) on the border region (10, 12) of the body cutout (5, 6).

4. Glazing assembly according to Claim 3, **characterized in that** the support (31) is provided with a self-adhesive strip (30) on its connecting surface (29) which is to be brought in contact with the border region (10, 12) of the body cutout (5, 6).

5. Glazing assembly according to Claim 4, **characterized in that** the self-adhesive strip (30) is designed as a double-sided adhesive tape.

6. Glazing assembly according to Claim 1, **characterized in that** a lower ply (32) of the support (31) is softer than the ply (33) lying above it.

7. Glazing assembly according to one of the preceding claims, **characterized in that** the support (31) is fastened to an inside (25) of the window (11, 17) via a self-adhesive strip (28), in particular a double-sided adhesive tape.

8. Glazing assembly according to Claim 1, **characterized in that** the sealing lip (26) is connected to the support (31) via a connecting extension (36), and **in that** the connecting extension (36) and the second layer (40) of the sealing lip (26) are designed as a single piece.

9. Glazing assembly according to Claim 1, **characterized in that** the sealing element (22, 23) has an encircling stabilizing thread (43).

10. Glazing assembly according to Claim 1, **characterized in that** the sealing lip (26) has a notch (37) on its bearing surface (38) which faces a border (35) of the window (11, 17).

## Revendications

1. Agencement de vitrage (7, 8) pour un véhicule automobile (1), comprenant une vitre (11, 17) et un élément d'étanchéité (22, 23) pour la vitre fixe, devant être collée à une région de bord (10, 12) d'une portion de carrosserie (5, 6), lequel élément d'étanchéité présente une portion de fixation (24), qui est réalisée sous forme d'appui (31) et qui est connectée à un côté interne (25) de la vitre et lequel élément d'étanchéité comprend une lèvre d'étanchéité (26) partant de la portion de fixation, qui peut être amenée en appui contre la région de bord de la portion de carrosserie, la lèvre d'étanchéité (26), vue sur sa longueur (LA), comprenant au moins une première et une deuxième strate (39, 40) qui sont disposées l'une sur l'autre et qui sont connectées fermement l'une à l'autre, la première strate (39) formant une strate visible et présentant une plus grande résistance à la température que la deuxième strate sous-jacente (40), **caractérisé en ce que** l'appui (31) se compose d'au moins deux couches (32, 33) superposées de différentes duretés, **en ce qu'**une couche inférieure (32) de l'appui (31) est plus tendre que la couche sus-jacente supérieure (33), et **en ce que** la deuxième strate de la lèvre d'étanchéité (26) part de la couche supérieure (33).

2. Agencement de vitrage selon la revendication 1, **caractérisé en ce que** la strate visible (strate 39) est fabriquée en un matériau, notamment un plastique, plus dur que la strate sous-jacente (40).

3. Agencement de vitrage selon la revendication 1, **caractérisé en ce que** la portion de fixation (24) de l'élément d'étanchéité (22, 23) est réalisée sous forme d'appui (31) afin de pouvoir supporter la vitre (11, 17) sur la région de bord (10, 12) de la portion de carrosserie (5, 6).

4. Agencement de vitrage selon la revendication 3, **caractérisé en ce que** l'appui (31) est configuré au niveau de sa surface de connexion (29) à amener en contact avec la région de bord (10, 12) de la portion de carrosserie (5, 6) avec une bande autoadhésive (30).

5. Agencement de vitrage selon la revendication 4, **caractérisé en ce que** la bande autoadhésive (30) est réalisée sous forme de ruban adhésif double face.

6. Agencement de vitrage selon la revendication 1, **caractérisé en ce qu'**une couche inférieure (32) de l'appui (31) est plus tendre que la couche sus-jacente (33).

7. Agencement de vitrage selon l'une quelconque des revendications précédentes, **caractérisé en ce que** l'appui (31) est fixé par le biais d'une bande autoadhésive (28), notamment un ruban adhésif double face, contre un côté interne (25) de la vitre (11, 17).

8. Agencement de vitrage selon la revendication 1, **caractérisé en ce que** la lèvre d'étanchéité (26) est connectée à l'appui (31) par le biais d'une saillie de connexion (36) et **en ce que** la saillie de connexion (36) et la deuxième strate (40) de la lèvre d'étanchéité (26) sont réalisées d'une seule pièce.

9. Agencement de vitrage selon la revendication 1, **caractérisé en ce que** l'élément d'étanchéité (22, 23) présente un fil de stabilisation périphérique (43).

10. Agencement de vitrage selon la revendication 1, **caractérisé en ce que** la lèvre d'étanchéité (26) présente une entaille (37) sur sa surface d'appui (38) tournée vers un bord (35) de la vitre (11, 17).
